# EUROPÄISCHE PATENTANMELDUNG

(11) **EP 1 211 440 A2**
(43) Veröffentlichungstag der Anmeldung: **05.06.2002**
(21) Anmeldenummer: 01127507.0
(22) Anmeldetag: 17.11.2001
(51) Int. Cl.: F16H 59/04

(54) **Vorrichtung zum Schalten eines Stufengetriebes in einem Kraftfahrzeug**

(30) Priorität: 01.12.2000 DE 10059703
(71) Anmelder: Bayerische Motoren Werke Aktiengesellschaft, 80809 München (DE)
(72) Erfinder: Schreckenberg, Franz, 85716 Lohhof (DE)

(57) **Zusammenfassung**

Die Erfindung betrifft eine Vorrichtung zum Schalten eines Stufengetriebes in einem Kraftfahrzeug, umfassend einen Schaltarm, der an beiden Enden über Koppelelemente am Getriebegehäuse bzw. an der Karosserie des Fahrzeugs elastisch befestigt ist, einen Schalthebel, der über ein Kugelgelenk mit dem Schaltarm verbunden ist, und eine Schaltstange, die an beiden Enden mit dem freien Ende des Schalthebels bzw. mit einer aus dem Getriebegehäuse herausragenden Schaltwelle verbunden ist, wobei das dem Getriebegehäuse zugekehrte Ende des Schaltarms näherungsweise in der Höhenlage der Schaltwelle angeordnet und über ein Bolzenlager mit vertikaler Achse abgestützt ist.

## Beschreibung

Die Erfindung betrifft eine Vorrichtung zum Schalten eines Stufengetriebes in einem Kraftfahrzeug, umfassend einen Schaltarm, der an beiden Enden über Koppelelemente am Getriebegehäuse bzw. an der Karosserie des Fahrzeugs elastisch befestigt ist, einen Schalthebel, der über ein Kugelgelenk mit dem Schaltarm verbunden ist, und eine Schaltstange, die an beiden Enden mit dem freien Ende des Schalthebels bzw. mit einer aus dem Getriebegehäuse herausragenden Schaltwelle verbunden ist, wobei das dem Getriebegehäuse zugekehrte Ende des Schaltarms näherungsweise in der Höhenlage der Schaltwelle angeordnet und über ein Bolzenlager abgestützt ist.

Bei einer solchen Vorrichtung dient der Schaltarm zur Abstützung bzw. Führung des Schalthebels. Da sich der Abstand zwischen den Befestigungspunkten des Schaltarms an der Karosserie des Fahrzeugs und dem Getriebe infolge von Schwingungen des mit dem Getriebe verblockten Motors ändern kann, sind elastische Koppelelemente erforderlich. Aus kinematischen Gründen ist eine parallele Anordnung von Schaltarm und Schaltstange vorteilhaft, weil dadurch eine kraftsparende axiale Verschiebung und/oder Verdrehung der Schaltstange ermöglicht wird. Eine solche parallele Anordnung von Schaltarm und Schaltstange würde aber bedeuten, daß das dem Getriebegehäuse zugekehrte Ende des Schaltarms im Abstand über der Schaltwelle angeordnet ist. Bei bestimmten Kraftfahrzeugtypen, insbesondere Personenwagen, ist eine derartige Anbindung des Schaltarms an das Getriebe aus Platzgründen nicht möglich. In diesen Fällen ist man daher gezwungen, das dem Getriebegehäuse zugekehrte Ende des Schaltarms näherungsweise in der Höhenlage der Schaltwelle anzuordnen. Zu diesem Zweck ist es bekannt, das Bolzenlager für den Schaltarm am Getriebegehäuse zur Schaltwelle seitlich versetzt anzuordnen. Zu diesem Zweck sind am Getriebegehäuse zwei vertikale Stege angeordnet, die das zugekehrte Ende des Schaltarms zwischen sich aufnehmen und die mit fluchtenden horizontalen Bohrungen versehen sind, in die ein die Buchse des Schaltarms durchsetzender horizontaler Bolzen eingesetzt ist. Diese Art der Anbindung des Schaltarms mit einem vertikalen Lagerbolzen ist an sich seit langem bekannt und wird bei solchen Schaltvorrichtungen, bei denen der Schaltarm im Abstand parallel zur Schaltstange angeordnet ist, erfolgreich angewendet. Wenn der Schaltarm jedoch, wie im vorliegenden Fall, nicht parallel zur Schaltstange angeordnet ist, dann ergeben sich etwas andere kinematische Verhältnisse. Damit der Schaltarm und insbesondere die Lagerbuchse nicht mit seitlichen Kräften belastet wird, müssen die am Getriebegehäuse angeordneten Stege parallel zur Längsachse des Schaltarms, d. h. schräg angeordnet sein. Dieser Schrägungswinkel oder der von den Achsen des Schaltarms und der Schaltwelle eingeschlossene Winkel ist aber nicht konstant, sondern eine Funktion der Länge des Schaltarms. Wie leicht einzusehen ist, nimmt der Schrägungswinkel mit abnehmender Länge des Schaltarms zu und mit zunehmender Länge des Schaltarms ab. Wenn bei einem Kraftfahrzeug einer bestimmten Baureihe verschiedene Motoren unterschiedlicher Länge eingebaut werden, dann sind auch unterschiedlich lange Schaltarme erforderlich, weil sich der Ort der Anbindung des Schaltarms an die Karosserie innerhalb einer Baureihe nicht ändert. Das bedeutet aber, daß Motoren unterschiedlicher Baulänge am Getriebegehäuse unterschiedlich orientierte Stege zur Lagerung des Schaltarms erfordern. Ein weiterer Nachteil dieser bekannten Anbindung des Schaltarms an das Getriebegehäuse besteht darin, daß Drehschwingungen des Motors um die Längsachse des Fahrzeugs über den Schaltarm auf den Schalthebel übertragen werden. Der am oberen Ende des Schalthebels angeordnete Schaltknopf schüttelt daher quer zur Längsachse des Fahrzeugs. Zur Dämpfung der Vibrationen des Schalthebels muß der Schaltknopf eine große Masse aufweisen, was wegen des begrenzten Volumens den Einsatz teurer Materialien mit hohem spezifischen Gewicht erforderlich macht.

Der Erfindung liegt die Aufgabe zugrunde, die gattungsgemäße Schaltvorrichtung hinsichtlich der Anbindung des Schaltarms an das Getriebegehäuse dahingehend weiterzubilden, daß die geschilderten Nachteile des Standes der Technik überwunden werden.

Erfindungsgemäß wird diese Aufgab dadurch gelöst, daß das zur Anbindung des Schaltarms an das Getriebegehäuse dienende Bolzenlager eine vertikale Achse hat. Durch diese konstruktive Maßnahme wird einerseits erreicht, daß unabhängig vom Verlauf des Schaltarms, d. h. von dem Winkel zwischen den Achsen des Schaltarms und der Schaltwelle stets gewährleistet ist, daß keine seitlichen Kräfte auf die Lagerbuchse ausgeübt werden. Andererseits hat sich überraschender Weise gezeigt, daß durch die Anbindung des Schaltarms an das Getriebegehäuse mit einer vertikalen Schwenkachse die Bewegungen des Schalthebels quer zur Fahrzeuglängsachse als Folge von Drehschwingungen des Motors erheblich reduziert werden.

Der Grundgedanke der Erfindung kann in der Weise verwirklicht werden, daß am Getriebegehäuse zwei horizontale Stege angeordnet sind, die das zugekehrte Ende des Schaltarms zwischen sich aufnehmen, und die mit fluchtenden vertikalen Bohrungen versehen sind, in die ein die Lagerbuchse des Schaltarms durchsetzender Bolzen eingesetzt ist.

Ein bevorzugtes Ausführungsbeispiel der Erfindung ist in der Zeichnung dargestellt und wird nachfolgend näher erläutert. Es zeigt:
- Fig. 1: eine schematische Draufsicht auf eine Schaltvorrichtung, und
- Fig. 2: einen Schnitt nach der Linie II - II in Fig. 1.

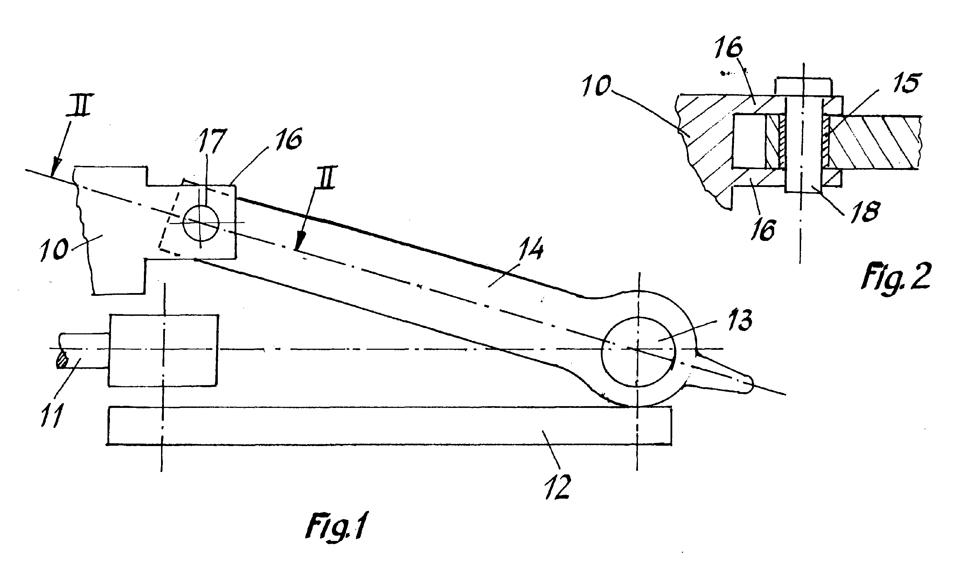

In Fig. 1 ist eine Vorrichtung zum Schalten eines Stufengetriebes in einem Kraftfahrzeug gezeigt, wobei einige Teile aus Gründen der Klarheit weggelassen sind. Von dem das Stufengetriebe aufnehmenden Getriebegehäuse 10 ist nur ein Bereich gezeigt, bei dem es sich um den Gehäusedeckel handeln kann. Von der zur Änderung der Gangstufen dienenden Schaltwelle 11 ist ebenfalls nur ein aus dem Getriebegehäuse 10 herausragender Endbereich gezeigt. Die Schaltwelle 11 ist über ein Horizontalgelenk mit einer Schaltstange 12 verbunden, die am andern Ende ebenfalls über ein Horizontalgelenk mit dem unteren Ende eines (nicht gezeigten) Schalthebels verbunden ist. Der Schalthebel ist mit einer Gelenkkugel in einer Öffnung 13 eines Schaltarms 14 allseitig schwenkbar gelagert. Das der Öffnung 13 benachbarte Ende des Schaltarms 14 ist in einem in der Karosserie des zugehörigen Kraftfahrzeugs angeordneten (nicht gezeigten) Lager elastisch abgestützt. Die vorstehend geschilderte Konstruktion einer Schaltvorrichtung ist allgemein bekannt und bedarf daher keiner näheren Erläuterung.

Das gegenüberliegende Ende des Schaltarms 14 ist ebenfalls mit einer vertikalen Öffnung versehen, in die eine Lagerbuchse 15 eingesetzt ist. An dem Getriebegehäuse 10 ist in der Höhenlage der Schaltwelle 11 im seitlichen Abstand von dieser eine Gelenkanbindung für den Schaltarm 14 angeordnet. Zu diesem Zweck sind am Getriebegehäuse zwei horizontale Stege 16 angeordnet, deren Abstand der Höhe oder der Dicke der Schaltstange 12 entspricht. Die beiden Stege 16 sind mit fluchtenden vertikalen Bohrungen 17 versehen, deren Durchmesser dem Innendurchmesser der Lagerbuche 15 entspricht.

Zur Montage wird der Schaltarm 14 zwischen die beiden Stege 16 des Getriebegehäuses 10 eingeführt, bis deren Bohrungen 17 mit der in den Schaltarm eingesetzten Lagerbuchse 15 fluchten, woraufhin ein Lagerbolzen 18 eingesetzt wird. Selbstverständlich kann im Einzelfall entschieden werden, ob der Schaltarm 14 zuerst mit dem Getriebegehäuse 10 und anschließend mit dem an der Karosserie angebrachten Lager verbunden wird oder umgekehrt.

Da der Schaltarm 14 um die von dem Lagerbolzen 18 definierte vertikale Achse gegenüber dem Getriebegehäuse 10 verschwenkbar ist, ist seine Schrägstellung in Bezug zur Längsachse der Schaltwelle 11 beliebig veränderbar. Es können daher den jeweiligen Erfordernissen entsprechend unterschiedlich lange Schaltarme mit dem Getriebegehäuse verbunden werden, ohne daß irgendwelche konstruktiven Abwandlungen der Lagerung erforderlich sind.

### Bezugszeichenliste:

- 10: Getriebegehäuse
- 11: Schaltwelle
- 12: Schaltstange
- 13: Öffnung
- 14: Schaltarm
- 15: Lagerbuchse
- 16: Stege
- 17: Bohrungen
- 18: Lagerbolzen

## Patentansprüche

1. Vorrichtung zum Schalten eines Stufengetriebes in einem Kraftfahrzeug, umfassend einen Schaltarm, der an beiden Enden über Koppelelemente am Getriebegehäuse bzw. an der Karosserie des Fahrzeugs elastisch befestigt ist, einen Schalthebel, der über ein Kugelgelenk mit dem Schaltarm verbunden ist, und eine Schaltstange, die an beiden Enden mit dem freien Ende des Schalthebels bzw. mit einer aus dem Getriebegehäuse herausragenden Schaltwelle verbunden ist, wobei das dem Getriebegehäuse zugekehrte Ende des Schaltarms näherungsweise in der Höhenlage der Schaltwelle angeordnet und über ein Bolzenlager abgestützt ist, **dadurch gekennzeichnet, daß** das Bolzenlager (18) eine vertikale Achse hat.

2. Vorrichtung nach Anspruch 1, **dadurch gekennzeichnet, daß** am Getriebegehäuse (10) zwei horizontale Stege (16) angeordnet sind, die das zugekehrte Ende des Schaltarms (14) zwischen sich aufnehmen und die mit fluchtenden vertikalen Bohrungen (17) versehen sind, in die ein die Lagerbuchse (15) des Schaltarms (14) durchsetzender Bolzen (18) eingesetzt ist.
